# EUROPEAN PATENT SPECIFICATION

(11) **EP 2 288 090 B1**
(45) Date of publication and mention of the grant of the patent: **14.12.2011**
(21) Application number: 09305776.8
(22) Date of filing: 21.08.2009
(51) Int. Cl.: H04L 12/56

(54) **Method of establishing an optical data transmission through a network**
Verfahren zur Bestimmung optischer Datenübertragung durch ein Netzwerk
Procédé pour établir une transmission optique de données via un réseau

(43) Date of publication of application: 23.02.2011
(73) Proprietor: Alcatel Lucent, 75008 Paris (FR)
(72) Inventor: Grammel, Gert, 71254, Ditzingen (DE)
(74) Representative: Urlichs, Stefan

(56) References cited:
- EP-A- 1 278 325
- WO-A-2007/062670
- WO-A-2008/077420
- US-A1- 2009 080 886
- KHAN B ET AL: "The effect of wavelength advertisement on the performance of an optical routing protocol" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, PISCATAWAY, NJ, USA, vol. 3, 29 November 2004 (2004-11-29), pages 1985-1988, XP010757862 ISBN: 978-0-7803-8794-2

## Description

### Fiend of the invention

The invention relates to a method and a network device for establishing an optical data transmission between two clients through a network.

### Background

When establishing an optical data transmission for transmitting an optical signal between two clients through a network, the clients may be connected by all optical network nodes. An all optical network node is called all optical since optical signals coming in at input fibers of the network node are switched to output fibers of the network node without converting the optical signals to electrical signals.

For the step of switching an incoming optical signal to an output fiber, an all optical network node may contain a wavelength selective switch to which the input fibers and the output fibers are connected. Once a wavelength selective switch of an all optical network node is configured, the output fiber to which an incoming optical signal is switched depends only on the input fiber at which the signal comes in at the node and on the wavelength of the signal.

Two incoming optical signals having different wavelengths coming in at different input fibers may be switched by a wavelength selective switch of an all optical network node onto the same output fiber, since the two signals do not disturb each other.

Two incoming optical signals having the same wavelength coming in at different input fibers cannot be switched by a wavelength selective switch of an all optical network node onto the same output fiber since the two signals would disturb each other.

Thus, in the case that two incoming optical signals having the same wavelength should be transmitted via the same output fiber, one of the incoming optical signals has to be changed in wavelength before feeding it to the wavelength selective switch of the network node. For this purpose, other types of network nodes are known which are not all optical since optical signals are converted to electrical signals by such network nodes. For changing the wavelength of an optical signal, such a network node contains a transponder which receives an incoming optical signal at a first wavelength, converts the optical signal to an electrical signal and furthermore converts the electrical signal to an optical signal at a second wavelength. Such a conversion is called optical-electrical-optical conversion (OEO). The process of the OEO conversion may include a regeneration of the signal in the electrical domain, which is called 3R-regeneration performing reshaping, reamplification and retiming of the signal. Such a 3R-regenration is carried out for compensating effects which degrade the optical signal, such as dispersion or attenuation.

The document US 2009/0080886 A1 discloses a method of determining a route wavelength assignment for a data path through a network containing wavelength selective switches. A path computing element assigns wavelengths to each lightpath along the data path and determines those network elements, at which the wavelength has to be changed.

It is an aim of the invention to improve the currently known methods for establishing an optical data transmission between two clients through a network using all optical network nodes.

### Summary

According to the invention, a method for establishing an optical data transmission between two clients through a network is proposed. The proposed method comprises different steps.

A request message is received, which contains a request for providing an optical transmission connection between a first client, connected to a first optical interface of a first all optical network node, and a second client, connected to a second optical interface of a second all optical network node.

Next, an optical path from the first optical interface of the first all optical network node to the second optical interface of the second all optical network node is determined. Furthermore, for providing the requested optical transmission connection to the first client, the determined optical path is established. As a next step, a mandatory wavelength for an optical signal transmitted along the established optical path is determined. The mandatory wavelength and the optical path are determined by the calculation device CD1, such that it is ensured that an optical signal transmitted at the mandatory wavelength along the determined optical path does not interfere with another signal at that same wavelength on any part of the optical path. A request message is sent to the first client, for requesting of the client a transmission of an optical signal at the mandatory wavelength. The request message contains request data which is indicative of the mandatory wavelength. The first client transmits the optical signal at the mandatory wavelength towards the first optical interface. The second client receives the transmitted optical signal, determines at least one signal characteristic of the received optical signal, and sends a first indication message to the first all optical network node or to a network management device of the said network. The indication message contains indicating data indicative of the signal characteristic.

The provided method has clear advantages compared to the prior art. When planning to transmit an optical signal between two clients through a network along a determined path, it might not be possible to transmit the optical signal at a first wavelength due to another optical signal having the same wavelength already being transmitted along at least a part of the optical path. According to the prior art, the first optical signal has to be converted by a transponder of a network node for changing the wavelength of the first signal. According to the proposed method, when determining the optical path for the first optical signal, also a mandatory wavelength at which the first optical signal shall be transmitted is determined, taking into account the wavelengths of other optical signals already being transmitted along at least a part of the determined optical path. Thus, according to the proposed method, no transponder for changing the wavelength of the first signal at a network node is necessary, resulting in a network which may rely on all optical network nodes only.

Furthermore, the first client is provided with information to which extent the transmitted optical signal suffers from effects such as signal attenuation or signal dispersion.

### Brief description of the drawings

Figure 1 shows two clients connected to by a network comprising all optical network nodes according to a first embodiment.
Figure 2 shows two clients connected to by a network comprising all optical network nodes according to a second embodiment.

### Description of embodiments

### First Embodiment

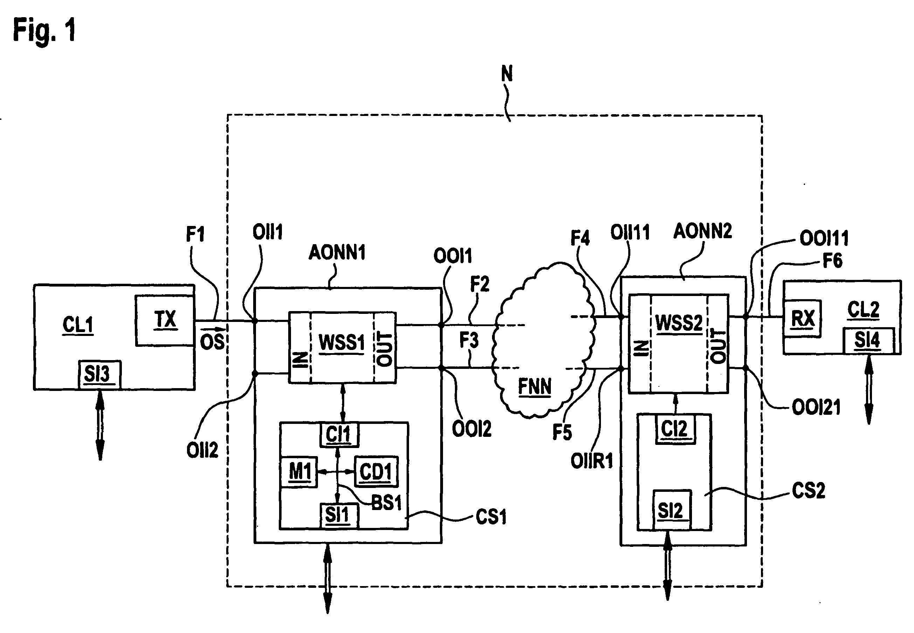

Figure 1 shows two clients CL1, CL2 connected by a network N. The network N contains at least a first all optical network node AONN1 and a second all optical network node AONN2. The nodes AONN1, AONN2 are connected by further network nodes FNN of the network N.

The first client CL1 contains an optical transmitter TX which is connected via a fiber F1 to a first optical input interface OII1 of the node AONN1. The transmitter TX of the client CL1 is able to transmit an optical data signal OS via the fiber F1 to the node AONN1. The transmitter is tunable in wavelength, meaning that the transmitter is able to set the wavelength of the optical signal OS according to a given wavelength.

The node AONN1 contains furthermore a second optical input interface OII2, to which a further client or a further network node may be connected. The node AONN1 contains furthermore a wavelength selective switch WSS1. The optical input interfaces OII1, OII2 are connected to an input branch IN of the wavelength selective switch WSS1. Optical output interfaces OOI1, OOI2 of the node AONN1 are connected to an output branch OUT of the wavelength selective switch WSS1. The output interfaces OOI1, OOI2 are also connected to the further network nodes FNN of the network N via optical fibers F2 and F3, respectively. The number of optical input and output interfaces OII1, OII2, OOI1, OOI2 of the node AONN 1 is chosen only exemplarily, further optical input or output interfaces may be contained by the network node AONN1. The wavelength selective switch WSS1 of the node AONN1 switches an incoming optical signal coming in at an input interface OII1, OII2 to one of the output interfaces OOI1, OOI2 depending on the input interface at which the signal comes in and depending on the wavelength of the signal.

The node AONN1 contains furthermore a control system CS1. The control system CS1 contains a memory unit M1 for storing routing data and a control interface CI1 for configuring the wavelength selective switch WSS1. The control system CS1 contains furthermore a calculation device CD1 and a signaling interface SI1. The memory unit M1, the control system CI1, the calculation device CD1 and the signaling interface SI1 are connected via a bus system BS1 of the control system CS1 for exchanging signals and/or data with each other.

The calculation device CD1 runs routing protocols known from Generalized Multiprotocol Label Switching (GMPLS) and exchanges via the signaling interface SI1 routing messages containing routing information with other network nodes FNN, AONN2 of the network N. For this purpose, the signaling interface SI1 contains a transmitter and a receiver for sending routing messages via a control plane of the network N. Furthermore, the calculation device CD1 creates and updates the routing data stored in the memory unit M1 based on the routing information received within the routing messages.

On the far end side of the network, a second all optical network node AONN2 is given, which contains two optical input interfaces OII11, OII21 connected to the further network nodes FNN of the network N via an optical fiber F4 and F5, respectively. The optical input interfaces OII11, OII21 are connected to an input branch IN of a wavelength selective switch WSS2 of the node AONN2. An optical output interface OOI11 is connected to an output branch OUT of the wavelength selective switch WSS2. Via an optical fiber F6, a receiver RX of a remote client CL2 is connected to the optical output interface OOI11 of the node AONN2. The node AONN2 contains furthermore a second optical output interface OOI21, to which a further client or a further network node may be connected. The number of optical input and output interfaces OII11, OII21, OOI11, OII21 of the node AONN2 is chosen only exemplarily, further optical input or output interfaces may be contained by the network node AONN2. The wavelength selective switch WSS2 of the node AONN2 switches an incoming optical signal coming in at an input interface OII11, OII21 to one of the output interfaces OII11, OOI21 depending on the input interface at which the signal comes in and depending on the wavelength of the signal. The node AONN2 contains furthermore a control system CS2, which contains a signaling interface SI2 for exchanging routing messages with other network nodes. The control system CS2 is furthermore able to configure the wavelength selective switch WSS2 of the node AONN2 via a control interface CI2.

The client CL1 wishes to transmit an optical signal for the purpose of data transmission to the remote client CL2. Thus, the client CL1 sends a request message to the node AONN1 for requesting of the node AONN 1 an optical transmission connection to the remote client CL2.

The request message is sent by the client CL1 via the fiber F1 through an optical supervisory channel λ*_{OSC}* and received by the node AONN1 at the optical input interface OII1. For receiving messages via the optical supervisory channel λ*_{OSC}*, the signaling interface SI1 of the control system CS1 contains an optical receiver which is connected to the optical input interface OII1.

Alternatively, the request message is sent by the client CL1 via a signaling interface SI3 contained by the client CL1 and received by the signaling interface SI1 of the control system CS1. The transmission of the request message between the two interface SI3, SI1 is carried out either via wire-bound transmission, in which case the interface SI3 contains a wire-bound transmitter and the interface SI1 contains a wire-bound receiver, or via wireless transmission, in which case the interface SI3 contains a radio transmitter and the interface SI1 contains a radio receiver.

Upon receiving the request message from the client CL1 via the signaling interface SI1, the calculation device CD1 determines an optical path from the input interface OII1 of the node AONN1 to the output interface OOI11 of the node AONN2. The calculation device CD1 does so by running algorithms known from Open Shortest Path First - Traffic Engineering (OSPF-TE) of GMPLS and by using the routing data stored in the memory unit M1.

Furthermore, the calculation device CD1 determines a mandatory wavelength at which the optical signal shall be transmitted along the optical path, for ensuring that the optical signal does not interfere with another optical signal transmitted along at least a part the optical path. The mandatory wavelength and the optical path are determined by the calculation device CD1, such that an optical signal transmitted at the mandatory wavelength along the determined optical path does not interfere with another signal at that same wavelength on any part of the optical path. A part of the optical path is a network node being part of the optical path and/or a fiber connecting network nodes being part of the optical path. By this, it is ensured that the optical signal can be transmitted at the determined wavelength along the determined optical path without interfering with another optical signal at that wavelength. Furthermore, the transmission of the optical signal can be carried out without having to change the wavelength of the optical signal at a network by means of transponders.

For gaining knowledge about which other optical signals are transmitted at which kind of wavelengths along certain parts of the optical path, the control system CS1 exchanges messages containing configuration information with other network nodes FNN, AONN2 forming the optical path. The configuration messages are exchanged between network nodes via a control plane, a data communication network or an optical supervisory channel λ*_{OSC}*. The configuration information of configuration messages sent by a network node provides knowledge about optical signals and their wavelengths being transmitted via fibers connected to that network node. The configuration information received via configuration messages by the control system CS1 is stored as configuration data in the memory unit M1 and is available to the calculation device CD1 via the bus system BS1. In other words, the configuration data is a data representation which fibers and network nodes of a network are occupied by optical signals of which wavelengths. Thus, with the routing data and the configuration data, the calculation device CD1 has information at hand for determining the mandatory wavelength at which the optical signal is to be transmitted along the optical path without interfering with other optical signals on that path.

The calculation device establishes the determined optical path by two actions. One action is that of configuring the wavelength selective switch WSS1 of the node AONN1, which the calculation device CD1 carries out by signaling configuration signals via a configuration interface CI1, which is contained in the control system CS1, to the wavelength selective switch WSS 1. The other action is that of configuring those other network nodes which also form the determined optical path. Therefore, the calculation device CD1 runs the protocol called Resource Reservation Protocol - Traffic Engineering (RSVP-TE) known from GMPLS. By running the protocol, the calculation device CD1 exchanges via the signaling interface SI1 configuration messages with those network nodes which shall form the optical path, for requesting a configuration of these network nodes such that the optical path is established. The network nodes indicate a configuration as requested by sending configuration messages containing an acknowledgment to the network node AONN1, where these messages are received by the calculation device CD1 via the signaling interface SI1. The configuration messages for configuring the network nodes are exchanged via a control plane, a data communication network or an optical supervisory channel λ*_{OSC}*.

Having established the optical path and having determined the mandatory wavelength for an optical signal which is to be transmitted along the determined optical path, the calculation device CD1 sends via the signaling interface SI1 a request message to the client CL1. The request message contains request data which is indicative of the mandatory wavelength. The request message is a request by the node AONN 1 for requesting of the client CL1 a transmission of an optical signal at the mandatory wavelength. The request message is sent via an optical supervisory channel λ*_{OSC}*, via a wire-bound transmission or via a wireless transmission.

Upon receiving the request message, the client CL1 transmits an optical data signal via the fiber F1 at the mandatory wavelength by setting the wavelength of the tunable optical transmitter TX to the mandatory wavelength.

As previously described, different kinds of messages are exchanged via the signaling interface SI1 of the control system CS1. The signaling interface SI1 does not necessarily have to be one single signaling interface. The signaling interface SI1 of the control system CS1 may comprise different signaling interfaces for exchanging different kinds of messages as described above.

Optical signals transmitted through fibers and network nodes are affected by effects such as signal attenuation or signal dispersion. Such effects are not necessarily independent of the wavelength of the transmitted optical signal but may depend on the wavelength of the optical signal. Furthermore, such effects depend on the type of material which is used for an optical fiber. Such materials are categorized, which means that a fiber of a certain type complies with a certain characteristic diagram or characteristic curve for describing the dependency of attenuation and dispersion on the wavelength. If the type of optical fiber to be used for transmission is known, then a wavelength can be chosen for minimizing the amount of signal attenuation or signal dispersion caused by this optical fiber. According to an alternative solution, the routing information contains information about the types of fibers connecting the network nodes of the network. Thus, the calculation device CD1 has information at hand, which types of fibers the optical signal will pass along the determined optical path. The calculation device CD1 determines the mandatory wavelength also in dependence on the types of optical fibers being part of the optical path, for taking into account minimizing the amount of signal attenuation or signal dispersion caused by these fibers.

The receiver RX of the remote client CL2 receives the optical data signal transmitted along the optical path and converts the optical data signal to a digital data stream. The client CL2 analyses the received optical signal and determines signal characteristics such as frequency bandwidth, signal level or signal-to-noise ratio (SNR) of the optical signal. Furthermore, the client CL2 analyses the digital data stream and determines as a further signal characteristic an error-rate of the transmitted data. The determined signal characteristics provide information to which extent the transmitted optical signal suffers from effects such as signal attenuation or signal dispersion.

The client CL2 sends an indication message to the node AONN2 via an optical supervisory channel λ*_{OSC}*. For this, the client CL2 contains an optical transmitter, not shown in Figure 1, which is connected via a fiber to an optical input interface of the node AONN2. For receiving messages via the optical supervisory channel λ*_{OSC}*, the control system CS2 of the node AONN2 contains an optical receiver which is connected to the optical input interface of the node AONN2 to which the client CL2 is connected. The indication messages contains indication data which is indicative of the signal characteristic determined by the client CL2. The indication message is received by the node AONN2 and from there transmitted to the node AONN1 via a control plane, a data communication network or an optical supervisory channel λ*_{OSC}* of the network N.

Alternatively, the indication message is sent by the client CL2 via a signaling interface SI4 contained by the client CL2 and received by the signaling interface SI2 of the control system CS2. The transmission of the indication message between the two interface SI4, SI2 is carried out either via wire-bound transmission, in which case the interface SI4 contains a wire-bound transmitter and the interface SI2 contains a wire-bound receiver, or via wireless transmission, in which case the interface SI4 contains a radio transmitter and the interface SI2 contains a radio receiver.

The indication message is generated and sent by the client CL2 automatically, for informing the node AONN 1 automatically about signal characteristics of the received signal. Alternatively, the calculation device of node AONN 1 sends a request message via the signaling interface SI1 to the remote node AONN2, from where this request message is transmitted to the client CL2. The request message contains a request for sending information about signal characteristics of the signal received by the client CL2. Upon receiving the request message, the client CL2 sends the indication message to the node AONN2 which transmits the message to the node AONN 1. Thus, by sending the request message, the node AONN 1 is able to poll information about signal characteristics of the received signal.

The calculation device CD1 of the node AONN1 receives the indication message via the signaling interface S1.

The calculation device CD1 uses information about the signal characteristics of the received signal, indicated by the indication data of the indication message, for determining a mandatory property for the optical signal transmitted by the client CL1.

Based on the signal level, the bandwidth, the SNR and/or the error rate of the signal at the receiving end, the calculation device CD1 determines a mandatory signal level which the optical signal injected by the transmitter TX of the client CL1 has to comply with. The mandatory signal level is one embodiment of a mandatory property which the optical signal injected by the transmitter TX has to comply with.

Alternatively, the calculation device CD1 determines based on the signal level, the bandwidth, the SNR and/or the error rate a changed wavelength, at which the optical signal shall be transmitted by the transmitter TX. The changed wavelength is another embodiment of a mandatory property which the optical signal injected by the transmitter TX has to comply with.

For requesting of the client CL1 that the optical signal transmitted by the transmitter TX shall comply with the determined mandatory property, the calculation device CD1 sends a request message to the client CL1. The request message contains request data which is indicative of the mandatory property derived by the calculation device CD1 of the node AONN1.

The node AONN1 sends the request message to the client CL1 via an optical supervisory channel λ*_{OSC}*. For this, the client CL1 contains an optical receiver, not shown in Figure 1, which is connected via a fiber to an optical output interface of the node AONN 1. For transmitting messages via the optical supervisory channel λ*_{OSC}*, the control system CS1 of the node AONN1 contains an optical transmitter which is connected to the optical output interface of the node AONN1 to which the client CL1 is connected.

Alternatively, the request message is sent by the node AONN 1 via the signaling interface SI1 and received by the signaling interface SI3 of the client SI3. The transmission of the request message between the two interface SI1, SI3 is carried out either via wire-bound transmission, in which case the interface SI1 contains a wire-bound transmitter and the interface SI3 contains a wire-bound receiver, or via wireless transmission, in which case the interface SI1 contains a radio transmitter and the interface SI3 contains a radio receiver.

The client CL1 receives the request message and analyses the request data. The client CL1 changes the optical signal transmitted by the transmitter TX such that it complies with the mandatory property indicated by the request data. The client does so by changing the wavelength and/or the signal power at which the transmitter TX transmits the optical signal.

When an optical signal is transmitted along an initial optical path via fibers and network nodes of a network, a failure of connectivity on that initial path may occur, which makes a change of the optical path necessary. For verifying the connectivity or detecting a loss of connectivity along an optical path within the network, the network nodes exchange messages according to the Link Management Protocol (LMP) known from GMPLS. Such messages are received by the calculation device CD1 at the node AONN1 via the signaling interface SI1. The calculation device CD1 detects a loss of connectivity along the initial optical path by analyzing the received messages. Thus, the calculation device is able to decide if a connection on an initial optical path is lost and if a new optical path has to be determined.

Furthermore, it may be necessary to change the initial path in the case that the optical signal received at the remote client CL2 is degraded by the effects of signal dispersion or attenuation to a certain extent. Signal dispersion or attenuation can be different for different optical paths. The calculation device CD1 derives from the signal characteristics of the received signal, indicated by the indication data of the indication message, if the optical path has to be changed. This is the case if the signal level falls below a given level threshold, if the SNR falls below a given SNR threshold or if the error rate exceeds a given error rate threshold.

If the connectivity along the initial optical path is lost or if the received optical signal is degraded such that the initial optical path has to be changed, the calculation device CD1 determines a changed optical path from the input interface OII1 of the node AONN1 to the output interface OOI11 of the node AONN2. This determination of the changed optical path is carried out by the calculation device in a way which is analogue to the determination of the initial optical path.

Furthermore, the calculation device CD1 determines a new mandatory wavelength at which the optical signal shall be transmitted along the changed optical path. This determination of the new mandatory wavelength for the changed optical path is carried out by the calculation device CD 1 in a way which is analogue to the determination of the mandatory wavelength for the initial optical path.

The calculation device CD1 establishes the changed optical path in a way which is analogue to the step of establishing the initial optical path.

The calculation device CD 1 sends via the signaling interface SI1 a request message to the client CL1. The request message contains request data which is indicative of the new mandatory wavelength. The request message is a request by the node AONN 1 for requesting of the client CL1 a transmission of an optical signal at the new mandatory wavelength. The request message is sent via an optical supervisory channel λ*_{OSC}*, via a wire-bound transmission or via a wireless transmission. Upon receiving the request message, the client CL1 transmits the optical data signal via the fiber F1 at the new mandatory wavelength by setting the wavelength of the tunable optical transmitter TX to the new mandatory wavelength.

### Second Embodiment

According to the first embodiment, the control systems CS1 of the network node AONN 1 controls the determination of the optical path end establishes the optical path.

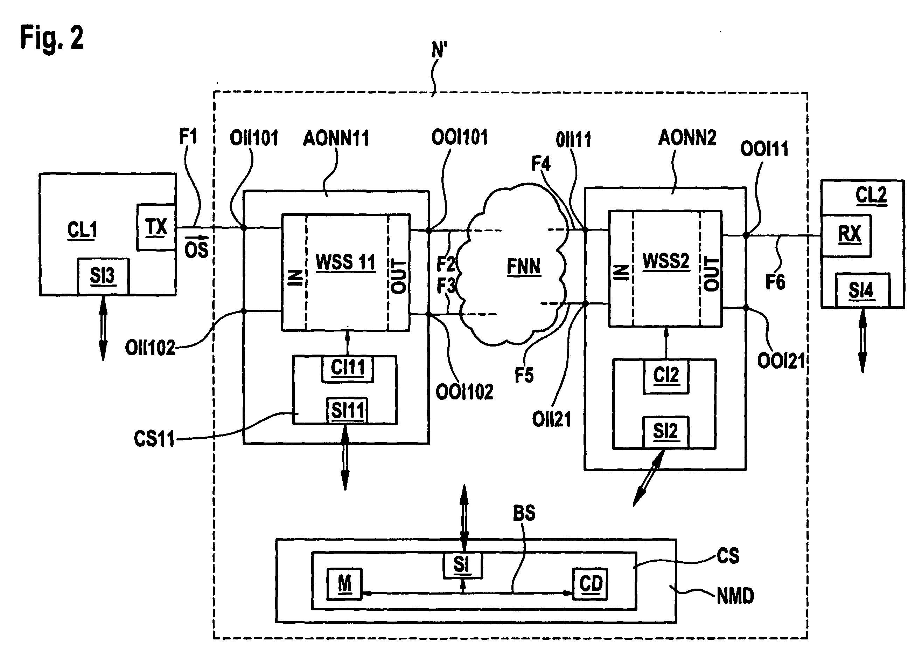

Figure 2 shows a network N' which is different from the network of Figure 1 for one major aspect. This aspect is that the controls system controlling the determination of the optical path and the establishment of the optical path is not contained by the network node AONN11, to which the first client CL1 is connected, but that a network management device NMD contains a control system CS which controls the determination of the optical path end which establishes the optical path.

According to Figure 2, the network N' contains at least a first all optical network node AONN 11 and a second all optical network node AONN22. The nodes AONN11, AONN22 are connected by further network nodes FNN of the network N.

The first client CL1 is a client as described in the first embodiment. The client CL1 is connected via a fiber F1 to the optical input interface OII101 of the node AONN11.

The node AONN 11 contains an optical input interface OII102, to which a further client or a further network node may be connected. The node AONN11 contains furthermore a wavelength selective switch WSS11. The optical input interfaces OII101, OOI102 are connected to an input branch IN of the wavelength selective switch WSS11. Optical output interfaces OOI101, OOI102 of the node AONN 11 are connected to an output branch OUT of the wavelength selective switch WSS11. The output interfaces OOI101, OOI102 are also connected to the further network nodes FNN of the network N via optical fibers F2 and F3, respectively. The number of optical input and output interfaces OII101, OII102, OOI101, OOI102 of the node AONN 11 is chosen only exemplarily, further optical input or output interfaces may be contained by the network node AONN 11. The wavelength selective switch WSS11 of the node AONN11 switches an incoming optical signal coming in at an input interface OII101, OII102 to one of the output interfaces OOI101, OOI102 depending on the input interface at which the signal comes in and depending on the wavelength of the signal. The node AONN 11 contains furthermore a control system CS11, which contains a signaling interface SI11 for exchanging routing messages with other network nodes and the network management device NMD. The control system CS11 is furthermore able to configure the wavelength selective switch WSS11 of the node AON N 11 via a control interface CI11.

On the far end side of the network, a second all optical network node AONN2 is given as already described according to the first embodiment.

Via an optical fiber F6, a receiver RX of a remote client CL2 is connected to the optical output interface OOI11 of the node AONN2.

The network management device NMD contains a control system CS. The control system CS contains a memory unit M for storing configuration data. The control system CS contains furthermore a calculation device CD and a signaling interface SI. The memory unit M, the control system CI, the calculation device CD and the signaling interface SI are connected via a bus system BS of the control system CS for exchanging signals and/or data with each other.

The calculation device CD runs protocols known from Simple Network Management Protocol (SNMP) or Common Management Information Protocol (CMIP). Running such protocols, the calculation device CD exchanges via the signaling interface SI configuration messages containing configuration information with network nodes FNN, AONN11, AONN22 of the network N'. Via such configuration messages, the calculation device CD configures the network nodes FNN, AONN 11, AONN22. For this purpose, the signaling interface SI contains a transmitter and a receiver for sending and receiving configuration messages via a network management plane of the network N. Furthermore, the calculation device CD creates and updates the configuration data stored in the memory unit M based on the routing information received within the routing messages. The configuration data thus provides knowledge about the configuration of the network nodes of the network and thus also provides information about optical signals and their wavelengths being transmitted via fibers connected network nodes of the network. The configuration data stored in the memory unit M is available to the calculation device CD via the bus system BS.

The client CL1 wishes to transmit an optical signal for the purpose of data transmission to the remote client CL2. Thus, the client CL1 sends a request message to the network management device NMD for requesting of the network an optical transmission connection to the remote client CL2.

The request message is sent by the client CL1 via the fiber F1 through an optical supervisory channel λ*_{OSC}* and received by the node AONN 11 at the optical input interface OII101. For receiving messages via the optical supervisory channel λ*_{OSC}*, the signaling interface SI11 of the control system CS11 contains an optical receiver which is connected to the optical input interface OII101. The request message is passed on by the signaling interface SI11 of the node AONN 11 to the network management device NMD via a network management plane.

Alternatively, the request message is sent by the client CL1 via a signaling interface SI3 contained by the client CL1 and received by the signaling interface SI of the control system CS. The transmission of the request message between the two interface SI3, SI1 is carried out either via wire-bound transmission, in which case the interface SI3 contains a wire-bound transmitter and the interface SI contains a wire-bound receiver, or via wireless transmission, in which case the interface SI3 contains a radio transmitter and the interface SI contains a radio receiver.

Upon receiving the request message from the client CL1 via the signaling interface SI, the calculation device CD determines an optical path from the input interface OII101 of the node AONN11 to the output interface OOI11 of the node AONN2. The calculation device CD does so by employing the configuration data stored in the memory unit M.

Furthermore, the calculation device CD determines a mandatory wavelength at which the optical signal shall be transmitted along the optical path, for ensuring that the optical signal does not interfere with another optical signal transmitted along at least a part the optical path. The mandatory wavelength and the optical path are determined by the calculation device CD1, such that an optical signal transmitted at the mandatory wavelength along the determined optical path does not interfere with another signal at that same wavelength on any part of the optical path. A part of the optical path is a network node being part of the optical path and/or a fiber connecting network nodes being part of the optical path. By this, it is ensured that the optical signal can be transmitted at the determined wavelength along the determined optical path without interfering with another optical signal at that wavelength. Furthermore, the transmission of the optical signal can be carried out without having to change the wavelength of the optical signal at a network by means of transponders.

For gaining knowledge about which other optical signals are transmitted at which kind of wavelengths along certain parts of the optical path, the control system relies on the configuration data stored in the memory unit M.

The calculation device CD establishes the determined optical path by configuring those network nodes which form the determined optical path, using for this configuration configuration messages according to SNMP or CMIP as already described above. The network nodes indicate a configuration as requested by sending configuration messages containing an acknowledgment to the network management device NMD, where these messages are received by the calculation device CD via the signaling interface SI.

Having established the optical path and having determined the mandatory wavelength for an optical signal which is to be transmitted along the determined optical path, the calculation device CD sends via the signaling interface SI a request message to the client CL1. The request message contains request data which is indicative of the mandatory wavelength. The request message is a request by the network management device NMD for requesting of the client CL1 a transmission of an optical signal at the mandatory wavelength. The request message is sent by the device NMD to the node AONN 11 via a network management plane and from there passed on to the client CL1 via an optical supervisory channel λ*_{OSC}*, via wirebound transmission pr via a wireless transmission.

Alternatively, the request message is sent by the device NMD to the client CL1 via a wire-bound transmission or via a wireless transmission.

Upon receiving the request message, the client CL1 transmits an optical data signal via the fiber F1 at the mandatory wavelength by setting the wavelength of the tunable optical transmitter TX to the mandatory wavelength.

According to an alternative solution, the network management device NMD has information at hand about the types of fibers used for transmission between the network nodes of the network . Such information is preferably provided to the network management device and stored in the memory unit M. The calculation device CD determines the mandatory wavelength also in dependence on the types of optical fibers being part of the optical path, for taking into account minimizing the amount of signal attenuation or signal dispersion caused by these fibers.

The receiver RX of the remote client CL2 receives the optical data signal transmitted along the optical path and converts the optical data signal to a digital data stream. The client CL2 analyses the received optical signal and determines signal characteristics as already described according to the first embodiment.

The client CL2 sends an indication message to the node AONN2 via an optical supervisory channel λ*_{OSC}*, via a wirebound transmission or via a wireless transmission. The indication message is passed on by the node AONN2 to the device NMD via a network management plane.

Alternatively, the indication message is sent by the client CL2 to the node AONN2 via a wire-bound or a wireless transmission.

The indication message is generated and sent by the client CL2 automatically, for informing the device NMD automatically about signal characteristics of the received signal. Alternatively, the calculation device CD sends a request message via the signaling interface SI over a network management plane to the remote node AONN2, from where this request message is transmitted to the client CL2. The request message contains a request for sending information about signal characteristics of the signal received by the client CL2. Upon receiving the request message, the client CL2 sends the indication message to the node AONN2 which transmits the message to the device NMD. Thus, by sending the request message, the control system CD of the device NMD is able to poll information about signal characteristics of the received signal.

The calculation device CD receives the indication message via the signaling interface SI. The calculation device CD uses information about the signal characteristics of the received signal, indicated by the indication data of the indication message, for determining a mandatory property for the optical signal transmitted by the client CL1.

The calculation device CD determines a mandatory signal level and/or a changed mandatory wavelength as a mandatory property in a way similar as described in the first embodiment.

For requesting of the client CL1 that the optical signal transmitted by the transmitter TX shall comply with the determined mandatory property, the calculation device CD sends via the signaling interface SI a request message to the client CL1. This transmission is carried out via a wirebound or via a wireless transmission Alternatively, the calculation device CD sends the request message to the node AONN1 via a network management plane, using the signaling interface. The node AONN 1 passes the message on to the client CL1. The request message contains request data which is indicative of the mandatory property derived by the calculation device CD.

The client CL1 receives the request message and analyses the request data. The client CL1 changes the optical signal transmitted by the transmitter TX such that it complies with the mandatory property indicated by the request data. The client does so by changing the wavelength and/or the signal power at which the transmitter TX transmits the optical signal.

For verifying the connectivity or detecting a loss of connectivity along an optical path within the network, the device NMP relies on messages exchanged with the network nodes according to the protocols SNMP or CMIP. Such messages are received by the calculation device CD via the signaling interface SI. Via such messages, the device NMP is informed about connectivity alarms sent by the network nodes. Via correlation of these alarm messages, the device NMP is able to decide if a loss of connectivity is present on the determined and established optical path. Thus, the calculation device CD is able to decide if a connection on an initial optical path is lost and if a new optical path has to be determined.

Furthermore, it may be necessary to change the initial path in the case that the optical signal received at the remote client CL2 is degraded by the effects of signal dispersion or attenuation to a certain extent. The calculation device CD derives if the optical path has to be changed in a way as described in the first embodiment.

If the connectivity along the initial optical path is lost or if the received optical signal is degraded such that the initial optical path has to be changed, the calculation device CD determines a changed optical path from the input interface OII101 to the output interface OOI11. This determination of the changed optical path is carried out by the calculation device in a way which is analogue to the determination of the initial optical path.

Furthermore, the calculation device CD determines a new mandatory wavelength at which the optical signal shall be transmitted along the changed optical path. This determination of the new mandatory wavelength for the changed optical path is carried out by the calculation device CD in a way which is analogue to the determination of the mandatory wavelength for the initial optical path.

The calculation device CD establishes the changed optical path in a way which is analogue to the step of establishing the initial optical path.

The calculation device CD sends via the signaling interface SI a request message to the client CL1. The request message contains request data which is indicative of the new mandatory wavelength. The request message is a request by the device NMD for requesting of the client CL1 a transmission of an optical signal at the new mandatory wavelength. The request message is sent by the calculation device CD via the signaling interface SI via a network management plane to the node AONN11, which passes the message on to the client CL1 through the optical supervisory channel via the fiber F1.

Alternatively, the request message is transmitted by the calculation device CD via the signaling interface SI to the signaling interface SI3 of the client CL1. This transmission is carried out either via wire-bound transmission, in which case the interface SI contains a wire-bound transmitter and the interface SI3 contains a wire-bound receiver, or via wireless transmission, in which case the interface SI contains a radio transmitter and the interface SI3 contains a radio receiver. Upon receiving the request message, the client CL1 transmits the optical data signal via the fiber F1 at the new mandatory wavelength by setting the wavelength of the tunable optical transmitter TX to the new mandatory wavelength.

The signaling interface SI does not necessarily have to be one single signaling interface. The signaling interface SI of the control system CS may comprise different signaling interfaces for exchanging different kinds of messages as described above.

## Claims

1. Method of establishing an optical data transmission through a network (N), comprising the steps of
- receiving a first request message, said first request message containing a request for providing an optical transmission connection between a first client (CL1), connected to a first optical interface (OII1) of a first all optical network node (AONN1), and a second client (CL2), connected to a second optical interface (OOI11) of a second all optical network node (AONN2),
- determining an optical path from said first optical interface (OII1) to said second optical interface (OOI11),
- establishing said determined optical path for providing said requested optical transmission connection to said first client (CL1),
- determining a mandatory wavelength for an optical signal (OS) transmitted along said optical path,
- determining said mandatory wavelength and said optical path, such that it is ensured that, when said optical signal (OS) is transmitted at said mandatory wavelength along said determined optical path, said optical signal does not interfere with another signal at said wavelength on any part of said optical path,
- requesting of said first client (CL1) a transmission of an optical signal (OS) at said mandatory wavelength, by sending a second request message to said first client (CL1), said second request message containing first request data indicative of said mandatory wavelength,
wherein said first client (CL1) transmits said optical signal at said mandatory wavelength towards said first optical interface (OII1),
**characterized in that** said second client
- receives said transmitted optical signal,
- determines at least one signal characteristic of said received optical signal, and
- sends a first indication message to said first all optical network node (AONN1) or to a network management device (NMD) of said network (N), said indication message containing first indicating data indicative of said signal characteristic.

2. Method according to claim 1,
comprising the further steps of
- receiving said first indication message,
- determining at least one mandatory property for said optical signal,
- requesting of said first client (CL1) said optical signal to comply with said determined mandatory property, by sending a third request message to said first client (CL1), said third request message containing second request data indicative of said mandatory property.

3. Method according to claim 2,
comprising the further step of requesting of said second client (CL2) said indication message, by sending a fourth request message to said second client (CL2).

4. Method according to claim 1 to 2,
comprising the further steps of
- determining a changed optical path from said first optical interface (OII1) to said second optical interface (OOI11),
- establishing said changed optical path,
- determining a second mandatory wavelength for an optical signal transmitted along said changed optical path,
- requesting of said first client (CL1) a transmission of said optical signal at said second mandatory wavelength, by sending a fifth request message to said first client (CL1), said fifth request message containing third request data indicative of said second mandatory wavelength.

5. All optical network device (AONN1),
comprising
a first optical input interface (OII1) adapted to receive an optical signal (OS) from a first client (CL1),
at least one first optical output interface (OOI1) adapted to send optical signals to further network devices (FNN, AONN2),
a wavelength selective switch (WSS1), connected to said first optical interface (OII1) and said second optical interface (OOI1),
a control system (CS1), comprising
- a memory unit (M1) adapted to store routing data and configuration data,
- at least one signalling interface (SI1) adapted to
o exchange routing messages containing routing data with further network devices (FNN, AONN2) for updating said routing data,
o exchange configuration messages with said further network devices (FNN, AONN2) for updating said configuration data and for requesting a configuration of said further network devices (FNN, AONN2),
o receive a first request message containing a request for providing an optical transmission connection between a first client (CL1), connected to said first optical input interface (OII1), and a second client (CL2), connected to a second optical output interface (OOI11) of a second all optical network node (AONN2),
- a calculation device (CD1) adapted to
o determine an optical path from said first optical input interface (OII1) to said second optical output interface (OOI11) by employing said routing data,
o determine a mandatory wavelength for an optical signal transmitted along said optical path by employing said routing data and said configuration data,
o establish said determined optical path for providing said requested optical transmission connection to said first client (CL1), by configuring said wavelength selective switch (WSS1) via a configuration interface and by exchanging configuration messages with said further network devices (FNN, AONN2) via said signalling interface (SI1),
o send a second request message via said signalling interface (SI1) to said first client (CL1), said second request message containing first request data indicative of said mandatory wavelength, for requesting of said first client (CL1) a transmission of an optical signal (OS) at said mandatory wavelength,
wherein said calculation device (CD1) is adapted to determine said mandatory wavelength and said optical path, such that it is ensured that when said optical signal (OS) is transmitted at said mandatory wavelength along said determined optical path said optical signal (OS) does not interfere with another signal at said wavelength on any part of said optical path,
**characterized in that** said all optical network device (AONN1) is furthermore adapted to send via said signalling interface (SI1) a third request message to said second client (CL2), for requesting from said second client (CL2) sending of an indication message that contains indication data which is indicative of signals characteristics determined by said second client (CL2).

6. Network management device (NMD),
comprising a control system (CS) for configuring all optical network devices (AONN211, FNN, AONN22) of a network (N),
said control system (CS) comprising
- a memory unit (M) adapted to store configuration data,
- at least one signalling interface (SI) adapted to
o exchange configuration messages with said all optical network devices (AONN11, FNN, AONN22) for requesting a configuration of said further network devices (AONN11, FNN, AONN22),
o receive a first request message containing a request for providing an optical transmission connection between a first client (CL1), connected to a first all optical network node (AONN11) via an optical input interface (OII101), and a second client (CL2), connected to a second all optical network node (AONN22) via an optical output interface (OOI11),
- a calculation device (CD) adapted to
o determine an optical path from said optical input interface (OOI101) to said optical output interface (OOI11) by employing said configuration data,
o determine a mandatory wavelength for an optical data signal transmitted along said optical path by employing said configuration data,
o establish said determined optical path for providing said requested optical transmission connection to said first client (CL1), by exchanging configuration messages with said all optical network devices (AONN11, FNN, AONN22) via said signalling interface (SI),
o send a second request message via said signalling interface (SI) to said first client (CL1), said second request message containing first request data indicative of said mandatory wavelength, for requesting of said first client (CL1) a transmission of an optical signal at said mandatory wavelength,
wherein said calculation device (CD) is adapted to determine said mandatory wavelength and said optical path, such that it is ensured that when said optical signal is transmitted at said mandatory wavelength along said determined optical path said optical signal does not interfere with another signal at said wavelength on any part of said optical path,
**characterized in that** said network management device (NMD) is furthermore adapted to send via signalling interface (SI1) a third request message to said second client (CL2), for requesting from said second client (CL2) sending of an indication message that contains indication data which is indicative of signals characteristics determined by said second client (CL2).

## Patentansprüche

1. Verfahren zur Herstellung einer optischen Datenübertragung durch ein Netzwerk (N), die folgenden Schritte umfassend:
- Empfangen einer ersten Anforderungsnachricht, wobei die besagte erste Anforderungsnachricht eine Anforderung für die Bereitstellung einer optischen Übertragungsverbindung zwischen einem ersten Client (CL1), welcher an eine erste optische Schnittstelle (OII1) eines ersten rein optischen Netzwerkknotens (AONN1), angeschlossen ist, und einem zweiten Client (CL2), welcher an eine zweite optische Schnittstelle (OOI11) eines zweiten rein optischen Netzwerkknotens (AONN2) angeschlossen ist, enthält,
- Bestimmen eines optischen Pfads von der besagten ersten optischen Schnittstelle (OII1) zu der besagten zweiten optischen Schnittstelle (OOI11),
- Herstellen des besagten bestimmten optischen Pfads für die Bereitstellung der besagten angeforderten optischen Übertragungsverbindung an den besagten ersten Client (CL1),
- Bestimmen einer vorgeschriebenen Wellenlänge für ein über den besagten optischen Pfad übertragenes optisches Signal (OS),
- Bestimmen der besagten vorgeschriebenen Wellenlänge und des besagten optischen Pfads derart, dass gewährleistet wird, dass, wenn das besagte optische Signal (OS) mit der besagten vorgeschriebenen Wellenlänge über den besagten bestimmten optischen Pfad übertragen wird, das besagte optische Signal kein anderes Signal mit der besagten Wellenlänge auf einem beliebigen Abschnitt des besagten optischen Pfads beeinträchtigt,
- Anfordern, von dem besagten ersten Client (CL1), einer Übertragung eines optischen Signals (OS) mit der besagten vorgeschriebenen Wellenlänge, durch Senden einer zweiten Anforderungsnachricht an den besagten ersten Client (CL1), wobei die besagte zweite Anforderungsnachricht erste Anforderungsdaten enthält, welche für die besagte vorgeschriebene Wellenlänge indikativ sind,
wobei der besagte erste Client (CL1) das besagte optische Signal mit der besagten vorgeschriebenen Wellenlänge an die besagte erste optische Schnittstelle (OII1) überträgt,
**dadurch gekennzeichnet, dass** der besagte zweite Client
- das besagte übertragene optische Signal empfängt,
- mindestens eine Signaleigenschaft des besagten empfangenen optischen Signals bestimmt, und
- eine erste Indikationsnachricht an den besagten ersten rein optischen Netzwerkknoten (AONN1) oder an eine Netzwerkverwaltungsvorrichtung (NMD) des besagten Netzwerks (N) sendet, wobei die besagte Indikationsnachricht erste Anzeigedaten enthält, welche für die besagte Signaleigenschaft indikativ sind.

2. Verfahren nach Anspruch 1,
weiterhin die folgenden Schritte umfassend:
- Empfangen der besagten ersten Indikationsnachricht,
- Bestimmen mindestens einer vorgeschriebenen Eigenschaft für das besagte optische Signal,
- Anfordern, von dem besagten ersten Client (CL1), dass das besagte optische Signal die besagte vorgeschriebene Eigenschaft erfüllt, durch Senden einer dritten Anforderungsnachricht an den besagten ersten Client (CL1), wobei die besagte dritte Anforderungsnachricht zweite Anforderungsdaten enthält, welche für die besagte vorgeschriebene Eigenschaft indikativ sind.

3. Verfahren nach Anspruch 2,
umfassend den weiteren Schritt des Anforderns der besagten Indikationsnachricht von dem besagten zweiten Client (CL2) durch Senden einer vierten Anforderungsnachricht an den besagten zweiten Client (CL2).

4. Verfahren nach Anspruch 1 bis 2,
die folgenden weiteren Schritte umfassend:
- Bestimmen eines geänderten optischen Pfads von der besagten ersten optischen Schnittstelle (OII1) zu der besagten zweiten optischen Schnittstelle (OOI11),
- Herstellen des besagten geänderten optischen Pfads,
- Bestimmen einer zweiten vorgeschriebenen Wellenlänge für ein über den besagten geänderten optischen Pfad übertragenes optisches Signal,
- Anfordern, von dem besagten ersten Client (CL1), einer Übertragung des besagten optischen Signals mit der besagten zweiten vorgeschriebenen Wellenlänge durch Senden einer fünften Anforderungsnachricht an den besagten ersten Client (CL1), wobei die besagte fünfte Anforderungsnachricht dritte Anforderungsdaten enthält, welche für die besagte zweite vorgeschriebene Wellenlänge indikativ sind.

5. Rein optische Netzwerkvorrichtung (AONN1),
umfassend:
Eine erste optische Eingangsschnittstelle (OII1), welche für den Empfang eines optischen Signals (OS) von einem ersten Client (CL1) ausgelegt ist,
mindestens eine erste optische Ausgangsschnittstelle (OOI1), welche für das Senden von optischen Signalen an weitere Netzwerkvorrichtungen (FNN, AONN2) ausgelegt ist,
einen wellenlängenselektiven Schalter (WSS1), welcher an die besagte erste optische Schnittstelle (OII1) und an die besagte zweite optische Schnittstelle (OOI1) angeschlossen ist,
eine Steuereinheit (CS1), umfassend:
- Eine Speichereinheit (M1), ausgelegt für das Speichern von Routing- und Konfigurationsdaten,
- mindestens eine Signalisierungsschnittstelle (SI1), ausgelegt für den
o Austausch von Routing-Nachrichten, welche Routing-Daten enthalten, mit weiteren Netzwerkvorrichtungen (FNN, AONN2), um die besagten Routing-Daten zu aktualisieren,
o Austausch von Konfigurationsnachrichten mit den besagten weiteren Netzwerkvorrichtungen (FNN, AONN2), um die besagten Konfigurationsdaten zu aktualisieren und eine Konfiguration der besagten weiteren Netzwerkvorrichtungen (FNN, AONN22) anzufordem,
o Empfang einer ersten Anforderungsnachricht, welche eine Anforderung für die Bereitstellung einer optischen Übertragungsverbindung zwischen einem ersten Client (CL1), welcher an die besagte erste optische Eingangsschnittstelle (OII1) angeschlossen ist, und einem zweiten Client (CL2), welcher an eine zweite optische Ausgangsschnittstelle (OOI1) eines zweiten rein optischen Netzwerkknotens (AONN2) angeschlossen ist, enthält,
- eine Berechnungsvorrichtung (CD1), ausgelegt für das
o Bestimmen eines optischen Pfads von der besagten ersten optischen Eingangsschnittstelle (OII1) zu der besagten zweiten optischen Ausgangsschnittstelle (OOI11) durch Anwenden der besagten Routing-Daten,
o Bestimmen einer vorgeschriebenen Wellenlänge für ein über den besagten optischen Pfad übertragenes optisches Datensignal durch Anwenden der besagten Routing-Daten und der besagten Konfigurationsdaten,
o Herstellen des besagten bestimmten optischen Pfads für die Bereitstellung der besagten angeforderten optischen Übertragungsverbindung an den besagten ersten Client (CL1) durch Konfigurieren des besagten wellenlängenselektiven Schalters (WSS1) über eine Konfigurationsschnittstelle, und durch Austauschen von Konfigurationsnachrichten mit den besagten weiteren Netzwerkvorrichtungen (FNN, AONN2) über die besagte Signalisierungsschnittstelle (SI1),
o Senden einer zweiten Anforderungsnachricht über die besagte Signalisierungsschnittstelle (SI1) an den besagten ersten Client (CL1), wobei die besagte zweite Anforderungsnachricht erste Anforderungsdaten enthalten, welche für die besagte vorgeschriebene Wellenlänge indikativ sind, um den besagten ersten Client (CL1) aufzufordern, ein optisches Signal (OS) mit der besagten vorgeschriebenen Wellenlänge zu übertragen,
wobei die besagte Berechnungsvorrichtung (CD1) dazu ausgelegt ist, die besagte vorgeschriebene Wellenlänge und den besagten optischen Pfad derart zu bestimmen, dass gewährleistet wird, dass, wenn das besagte optische Signal (OS) mit der besagten vorgeschriebenen Wellenlänge über den besagten bestimmten optischen Pfad übertragen wird, das besagte optische Signal (OS) kein anderes Signal mit der besagten Wellenlänge auf einem beliebigen Abschnitt des besagten optischen Pfads beeinträchtigt,
**dadurch gekennzeichnet, dass** die besagte rein optische Netzwerkvorrichtung (AONN1) weiterhin für das Senden, über die besagte Signalisierungsschnittstelle (SI1), einer dritten Anforderungsnachricht an den besagten zweiten Client (CL2) ausgelegt ist, um den besagten zweiten Client (CL2) aufzufordern, eine Indikationsnachricht, welche Indikationsdaten enthält, die für von dem besagten zweiten Client (CL2) bestimmte Signaleigenschaften indikativ sind, zu senden.

6. Netrwerkverwaltungsvorrichtung (NMD),
umfassend ein Steuersystem (CS) zum Konfigurieren von rein optischen Netzwerkvorrichtungen (AONN11, FNN, AONN22) eines Netzwerks (N),
wobei das besagte Steuersystem (CS) umfasst:
- Eine Speichereinheit (M), ausgelegt für das Speichern von Konfigurationsdaten,
- mindestens eine Signalisierungsschnittstelle (SI), ausgelegt für den
o Austausch von Konfigurationsnachrichten mit den besagten rein optischen Netzwerkvorrichtungen (AONN11, FNN, AONN22), um eine Konfiguration der besagten weiteren Netzwerkvorrichtungen (AONN11, FNN, AONN22) anzufordern,
o Empfang einer ersten Anforderungsnachricht, welche eine Anforderung für die Bereitstellung einer optischen Übertragungsverbindung zwischen einem ersten Client (CL1), welcher über eine optische Eingangsschnittstelle (OII101) an einen ersten rein optischen Netzwerkknoten (AONN11) angeschlossen ist, und einem zweiten Client (CL2), welcher über eine optische Ausgangsschnittstelle (OOI11) an einen zweiten rein optischen Netzwerkknoten (AONN22) angeschlossen ist, enthält,
- eine Berechnungsvorrichtung (CD), ausgelegt für das
o Bestimmen eines optischen Pfads von der besagten optischen Eingangsschnittstelle (OI1101) zu der besagten optischen Ausgangsschnittstelle (00111) durch Anwenden der besagten Konfigurationsdaten,
o Bestimmen einer vorgeschriebenen Wellenlänge für ein über den besagten optischen Pfad übertragenes optisches Datensignal durch Anwenden der besagten Konfigurationsdaten,
o Herstellen des besagten bestimmten optischen Pfads für die Bereitstellung der besagten angeforderten optischen Übertragungsverbindung an den besagten ersten Client (CL1) durch Austauschen von Konfigurationsnachrichten mit den besagten rein optischen Netzwerkvorrichtungen (AONN11, FNN, AONN22) über die besagte Signalisierungsschnittstelle (SI),
o Senden einer zweiten Anforderungsnachricht über die besagte Signalisierungsschnittstelle (SI) an den besagten ersten Client (CL1), wobei die besagte zweite Anforderungsnachricht erste Anforderungsdaten enthalten, welche für die besagte vorgeschriebene Wellenlänge indikativ sind, um den besagten ersten Client (CL1) aufzufordern, ein optisches Signal mit der besagten vorgeschriebenen Wellenlänge zu übertragen,
wobei die besagte Berechnungsvorrichtung (CD) dazu ausgelegt ist, die besagte vorgeschriebene Wellenlänge und den besagten optischen Pfad derart zu bestimmen, dass gewährleistet wird, dass, wenn das besagte optische Signal mit der besagten vorgeschriebenen Wellenlänge über den besagten optischen Pfad übertragen wird, das besagte optische Signal kein anderes Signal mit der besagten Wellenlänge auf einem beliebigen Abschnitt des besagten optischen Pfads beeinträchtigt,
**dadurch gekennzeichnet, dass** die besagte Netzwerkverwaltungsvorrichtung (NMD) weiterhin für das Senden, über die Signalisierungsschnittstelle (SI1), einer dritten Anforderungsnachricht an den besagten zweiten Client (CL2) ausgelegt ist, um den besagten zweiten Client (CL2) aufzufordern, eine Indikationsnachricht, welche Indikationsdaten enthält, die für von dem besagten zweiten Client (CL2) bestimmte Signaleigenschaften indikativ sind, zu senden.

## Revendications

1. Procédé pour établir une transmission optique de données par l'intermédiaire d'un réseau (N), comprenant les étapes suivantes
- recevoir un premier message de demande, ledit premier message de demande contenant une demande pour fournir une connexion de transmission optique entre un premier client (CL1), connecté à une première interface optique (OII1) d'un premier noeud de réseau tout optique (AONN1), et un deuxième client (CL2), connecté à une deuxième interface optique (OOI11) d'un deuxième noeud de réseau tout optique (AONN2),
- déterminer un trajet optique entre ladite première interface optique (OII1) et ladite deuxième interface optique (OOI11),
- établir ledit trajet optique déterminé pour fournir ladite connexion de transmission optique demandée audit premier client (CL1),
- déterminer une longueur d'onde obligatoire pour un signal optique (OS) transmis le long dudit trajet optique,
- déterminer ladite longueur d'onde obligatoire et ledit trajet optique, de sorte qu'il soit garanti que, lorsque ledit signal optique (OS) est transmis à ladite longueur d'onde obligatoire le long dudit trajet optique déterminé, ledit signal optique n'interfère pas avec un autre signal à ladite longueur d'onde sur aucune partie dudit trajet optique,
- demander audit premier client (CL1) une transmission d'un signal optique (OS) à ladite longueur d'onde obligatoire, en envoyant un deuxième message de demande audit premier client (CL1), ledit deuxième message de demande contenant des premières données de demande indiquant ladite longueur d'onde obligatoire,
dans lequel ledit premier client (CL1) transmet ledit signal optique à ladite longueur d'onde obligatoire en direction de ladite première interface optique (OII1),
**caractérisé en ce que** ledit deuxième client
- reçoit ledit signal optique transmis,
- détermine au moins une caractéristique de signal dudit signal optique reçu, et
- envoie un premier message d'indication audit premier noeud de réseau tout optique (AONN1) ou à un dispositif de gestion de réseau (NMD) dudit réseau (N), ledit message d'indication contenant des premières données d'indication indiquant ladite caractéristique de signal.

2. Procédé selon la revendication 1,
comprenant les étapes supplémentaires suivantes
- recevoir ledit premier message d'indication,
- déterminer au moins une propriété obligatoire pour ledit signal optique,
- demander audit premier client (CL1) ledit signal optique pour satisfaire ladite propriété obligatoire déterminée, en envoyant un troisième message de demande audit premier client (CL1), ledit troisième message de demande contenant des deuxièmes données de demande indiquant ladite propriété obligatoire.

3. Procédé selon la revendication 2,
comprenant l'étape supplémentaire consistant à demander audit deuxième client (CL2) ledit message d'indication, en envoyant un quatrième message de demande audit deuxième client (CL2).

4. Procédé selon les revendications 1 à 2,
comprenant les étapes supplémentaires suivantes
- déterminer un trajet optique modifié entre ladite première interface optique (OII1) et ladite deuxième interface optique (OOI11),
- établir ledit trajet optique modifié,
- déterminer une deuxième longueur d'onde obligatoire pour un signal optique transmis le long dudit trajet optique modifié,
- demander audit premier client (CL1) une transmission dudit signal optique à ladite deuxième longueur d'onde obligatoire, en envoyant un cinquième message de demande audit premier client (CL1), ledit cinquième message de demande contenant des troisièmes données de demande indiquant ladite deuxième longueur d'onde obligatoire.

5. Dispositif de réseau tout optique (AONN1),
comprenant
une première interface d'entrée optique (OII1) adaptée pour recevoir un signal optique (OS) provenant d'un premier client (CL1),
au moins une première interface de sortie optique (OOI1) adaptée pour envoyer des signaux optiques à d'autres dispositifs de réseau (FNN, AONN2),
un commutateur à sélection de longueur d'onde (WSS1), connecté à ladite première interface optique (OI11) et à ladite deuxième interface optique (OOI1),
un système de commande (CS1), comprenant
- une unité de mémoire (M1) adaptée pour stocker des données d'acheminement et des données de configuration,
- au moins une interface de signalisation (SI1) adaptée pour
o échanger des messages d'acheminement contenant des données d'acheminement avec d'autres dispositifs de réseau (FNN, AONN2) pour mettre à jour lesdites données d'acheminement,
o échanger des messages de configuration avec lesdits autres dispositifs de réseau (FNN, AONN2) pour mettre à jour lesdites données de configuration et pour demander une configuration desdits autres dispositifs de réseau (FNN, AONN2).
o recevoir un premier message de demande contenant une demande pour fournir une connexion de transmission optique entre un premier client (CL1), connecté à ladite première interface d'entrée optique (OII1), et un deuxième client (CL2), connecté à une deuxième interface de sortie optique (OOI11) d'un deuxième noeud de réseau tout optique (AONN2),
- un dispositif de calcul (CD1) adapté pour
o déterminer un trajet optique entre ladite première interface d'entrée optique (OII1) et ladite deuxième interface de sortie optique (OOI11) en utilisant lesdites données d'acheminement,
o déterminer une longueur d'onde obligatoire pour un signal optique transmis le long dudit trajet optique en utilisant lesdites données d'acheminement et lesdites données de configuration,
o établir ledit trajet optique déterminé pour fournir ladite connexion de transmission optique demandée audit premier client (CL1), en configurant ledit commutateur à sélection de longueur d'onde (WSS1) par l'intermédiaire d'une interface de configuration et en échangeant des messages de configuration avec lesdits autres dispositifs de réseau (FNN, AONN2) par l'intermédiaire de ladite interface de signalisation (SI1),
o envoyer un deuxième message de demande par l'intermédiaire de ladite interface de signalisation (SI1) audit premier client (CL1), ledit deuxième message de demande contenant des premières données de demande indiquant ladite longueur d'onde obligatoire, pour demander audit premier client (CL1) une transmission d'un signal optique (OS) à ladite longueur d'onde obligatoire,
dans lequel ledit dispositif de calcul (CD1) est adapté pour déterminer ladite longueur d'onde obligatoire et ledit trajet optique, de sorte qu'il soit garanti que, lorsque ledit signal optique (OS) est transmis à ladite longueur d'onde obligatoire le long dudit trajet optique déterminé, ledit signal optique (OS) n'interfère pas avec un autre signal à ladite longueur d'onde sur aucune partie dudit trajet optique,
**caractérisé en ce que** ledit dispositif de réseau tout optique (AONN1) est en outre adapté pour envoyer par l'intermédiaire de ladite interface de signalisation (SI1) un troisième message de demande audit deuxième client (CL2), pour demander audit deuxième client (CL2) d'envoyer un message d'indication contenant des données d'indication qui indiquent des caractéristiques de signaux déterminées par ledit deuxième client (CL2).

6. Dispositif de gestion de réseau (NMD),
comprenant un système de commande (CS) pour configurer des dispositifs de réseau tout optique (AONN11, FNN, AONN22) d'un réseau (N),
ledit système de commande (CS) comprenant
- une unité de mémoire (M) adaptée pour stocker des données de configuration,
- au moins une interface de signalisation (SI) adaptée pour
o échanger des messages de configuration avec lesdits dispositifs de réseau tout optique (AONN11, FNN, AONN22) pour demander une configuration desdits autres dispositifs de réseau (AONN11, FNN, AONN22),
o recevoir un premier message de demande contenant une demande pour fournir une connexion de transmission optique entre un premier client (CL1), connecté à un premier noeud de réseau tout optique (AONN11) par l'intermédiaire d'une interface d'entrée optique (OII101), et un deuxième client (CL2), connecté à un deuxième noeud de réseau tout optique (AONN22) par l'intermédiaire d'une interface de sortie optique (OOI11),
- dispositif de calcul (CD) adapté pour
o déterminer un trajet optique entre ladite interface d'entrée optique (011101) et ladite interface de sortie optique (00111) en utilisant lesdites données de configuration,
o déterminer une longueur d'onde obligatoire pour un signal de données optique transmis le long dudit trajet optique en utilisant lesdites données de configuration,
o établir ledit trajet optique déterminé pour fournir ladite connexion de transmission optique demandée audit premier client (CL1), en échangeant des messages de configuration avec lesdits dispositifs de réseau tout optique (AONN11, FNN, AONN22) par l'intermédiaire de ladite interface de signalisation (SI),
o o envoyer un deuxième message de demande par l'intermédiaire de ladite interface de signalisation (SI) audit premier client (CL1), ledit deuxième message de demande contenant des premières données de demande indiquant ladite longueur d'onde obligatoire, pour demander audit premier client (CL1) une transmission d'un signal optique à ladite longueur d'onde obligatoire,
dans lequel ledit dispositif de calcul (CD) est adapté pour déterminer ladite longueur d'onde obligatoire et ledit trajet optique, de sorte qu'il soit garanti que, lorsque ledit signal optique est transmis à ladite longueur d'onde obligatoire le long dudit trajet optique déterminé, ledit signal optique n'interfère pas avec un autre signal à ladite longueur d'onde sur aucune partie dudit trajet optique,
**caractérisé en ce que** ledit dispositif de gestion de réseau (NMD) est en outre adapté pour envoyer par l'intermédiaire de l'interface de signalisation (SI1) un troisième message de demande audit deuxième client (CL2), pour demander audit deuxième client (CL2) d'envoyer un message d'indication contenant des données d'indication qui indiquent des caractéristiques de signaux déterminées par ledit deuxième client (CL2).
